# EUROPÄISCHE PATENTSCHRIFT

(11) **EP 0 876 302 B1**
(45) Veröffentlichungstag und Bekanntmachung des Hinweises auf die Patenterteilung: **26.07.2000**
(21) Anmeldenummer: 96942222.9
(22) Anmeldetag: 19.12.1996
(51) Int. Cl.: C02F 3/08, C02F 3/34, C02F 1/40

(54) **ANLAGE ZUM BESEITIGEN VON FETTEN UND ÖLEN**
FAT AND OIL REMOVAL INSTALLATION
INSTALLATION D'ELIMINATION D'HUILES ET DE GRAISSES

(30) Priorität: 19.12.1995 DE 19547400
(43) Veröffentlichungstag der Anmeldung: 11.11.1998
(73) Patentinhaber: Biorem AG, 6340 Baar (CH)
(72) Erfinder: HORAKOVA, Dana, 638 00 Brno (CZ); HORAK, Rudolf, 638 00 Brno (CZ); NEMEC, Miroslav, 664 31 Ceska (CZ)
(74) Vertreter: Felber, Josef
(86) Internationale Anmeldenummer: CH9600451
(87) Internationale Veröffentlichungsnummer: WO9722560

(56) Entgegenhaltungen:
- EP-A- 0 546 881
- WO-A-96/38389
- DE-A- 1 658 068
- PATENT ABSTRACTS OF JAPAN vol. 096, no. 011, 29.November 1996 & JP 08 182995 A (CORONA GIKEN KOGYO KK;KUNO TADAHIKO)
- PATENT ABSTRACTS OF JAPAN vol. 095, no. 006, 31.Juli 1995 & JP 07 075795 A (FUJITA CORP), 20.März 1995,

## Beschreibung

Die vorliegende Erfindung betrifft im allgemeinen eine Anlage zum Beseitigen von Fetten und Oelen, wobei hierzu besondere fett- und öldegradierende Mikroorganismen zum Einsatz kommen. Im besonderen kann die Anlage zum gleichzeitigen Abscheiden und Beseitigen von Fetten und Oelen in Abwässern ausgelegt sein. Bei den in Betracht kommenden Fetten und Oelen kann es sich um verschiedene Arten handeln, zum Beispiel um mineralische, synthetische oder organische. Von besonderem Interesse sind hier die organischen Fette und Oele, wie sie vorallem in Hotels, Gaststätten und anderen Grossküchenbetrieben im Abwasser anfallen. Die Anlage kann jedoch auch für die Abwässer von Lebensmittelverarbeitenden Betrieben aller Art wie zum Beispiel für Schlachthäuser und Metzgereien konzipiert werden.

Viele Gemeinden haben zum Schutz ihrer Abwasser-Reinigungsanlagen, sowie um ein Zusetzen der Kanalisationsrohre zu verhindern, Einleitebedingungen für die gewerblichen Kanalanschlussnehmer festgelegt. Der zum Beispiel in Deutschland zulässige Gehalt an organischen Fetten und Oelen pro Liter Abwasser schwankt je nach Verwaltungsbezirk für solche gewerblichen Betriebe zwischen 50mg und 250mg, wobei zunehmend ein Grenzwert von 50mg vorgeschrieben wird. Deshalb werden von den betroffenen Betrieben Fettabscheide-Anlagen eingebaut. In Ballungszentren wird erfahrungsgemäss auf etwa 500 Einwohner eine solche Fettabscheide-Anlage betrieben.

Im Zusammenhang mit dem Betrieb von konventionellen Fettabscheide-Anlagen, die aufgrund ihrer Funktion einzig aufgrund der Schwerkraft die Fette und Oele vom Wasser abscheiden, gibt es eine Reihe von Problemkreisen. Zunächst ist das tatsächliche Abscheidevermögen der Abscheideanlagen unter den in der Betriebspraxis stark schwankenden Bedingungen oftmals geringer als es zur Einhaltung der festgesetzten Grenzwerte nötig wäre. Bei der Bestimmung des Gesamtgehaltes an organischen Oelen und Fetten als polare lipophile Stoffe wird oft nicht beachtet, dass ein Fettabscheider wegen seiner Funktionsweise lediglich die abscheidbaren Anteile der lipophilen Leichtstoffe zurückhalten kann. Emulgierte, gelöste und dispergierte Fettanteile, wie sie infolge der eingesetzten Waschmittel und der hohen Temperaturen im Abwasser von Geschirrspülanlagen vorkommen, können damit nicht zurückgehalten werden. Das Fett befindet sich in einem ähnlichen Zustand wie jenes in der Milch, in welcher es Fettpartikel gibt, die bloss 0.1µm bis 10µm Durchmesser aufweisen und nicht aufschwimmen.

Weiter sollte ein konventioneller Fettabscheider ca. alle zwei bis vier Wochen entleert und gereinigt werden, wofür der Betreiber der Anlage zuständig ist. Fettabscheider in Metzgereien sollten mindestens einmal wöchentlich oder aber spätestens bei Füllung des Fett-Speichervolumens gereinigt werden. Fettabscheider in Küchenbetrieben sollten in der Regel alle 14 Tage entleert werden. Der Abwasseranfall und die Abwasserbeschaffenheit schwankt jedoch selbst unter Küchenbetrieben mit anzahlmässig gleichgrossem Ausstoss von Essen. Untersuchungen haben gezeigt, dass wegen der Verschiedenartigkeit der Speisen und deren Zubereitung der Fettgehalt im Abwasser einer Spitalküche, die täglich 1'000 Essen produziert, im Durchschnitt zum Beispiel ca. 500 mg/l beträgt, während er bei einer Truppenküche bei ca. 1'500 mg/l liegt, also beim Dreifachen. Pro Essen rechnet man mit einem Fettanfall von 3 bis 30 Gramm. Je nach den Gegebenheiten des angeschlossenen Küchenbetriebes müssen die Fettabscheider mehr oder weniger oft entleert werden. Zum regelmässigen Entleeren des Fettabscheiders wird dieser geöffnet und danach wird die Saugleitung eines Entsorgungsfahrzeuges eingebracht. Der beim Absaugen des Fettabscheiderinhaltes auftretende ekelerregende Gestank führt dabei zu einer sehr unangenehmen Geruchsbelästigung in der unmittelbaren Umgebung der Anlage. Nach dem Entleeren der Fettabscheideranlage wird diese mit Heissdampf gereinigt. Diese unbedingt notigen Wartungsarbeiten sind mit Umtrieben und erheblichen und immer wieder anfallenden Kosten verbunden. Um die abzutransportierenden Volumina zu reduzieren, sind Fettabscheider-Systeme bekanntgeworden, bei denen das abgeschiedene Fett in gesonderte Behälter gepresst wird, sodass nur noch das eigentliche abgeschiedene Material abtransportiert und einer Entsorgung oder Wiederverwertung zugeführt werden muss. Trotzdem sind jedoch regelmässige teure Abtransporte nötig, welche zusätzlich die Umwelt belasten.

Es ist deshalb im allgemeinen die Aufgabe der vorliegenden Erfindung, eine Anlage zum Beseitigen von Fetten und Oelen egal welcher Herkunft zu schaffen, welche die sonst damit anfallenden Kosten einspart oder zumindest reduziert.

Im besonderen ist es eine Aufgabe der vorliegenden Erfindung, eine Anlage zum Abscheiden und nachfolgenden Beseitigen von Fetten und Oelen in Abwässern zu schaffen, welche einen regelmässigen Abtransport des Fettabscheiderinhaltes oder des abgeschiedenen Fettes erübrigt und somit die damit anfallenden Kosten einspart, und welche die Geruchsbelästigung, die von einem herkömmlichen Fettabscheider ausgeht, eliminiert.

In einer besonderen Ausführung ist es eine zusätzliche Aufgabe der Anlage zum Abscheiden und nachfolgenden Beseitigen von Fetten und Oelen in Abwässern, eine verbesserte Zurückhaltung der Fette und Oele im Abwasser zu erzielen und damit tiefere Grenzwerte an lipophilen Stoffen im ausfliessenden Abwasser zu erreichen.

Die allgemeine Aufgabe wird gelöst von einer Anlage zum Beseitigen von Fetten und Oelen, die sich durch die Merkmale des Patentanspruches 1 auszeichnet.

Die besondere Aufgabe zur Schaffung einer Anlage zum Abscheiden und nachfolgenden Beseitigen von Fetten und Oelen in Abwässern wird gelöst von einer Anlage gemäss den Merkmalen des abhängigen Patentanspruches 2.

Die zusätzliche Aufgabe zur verbesserten Zurückhaltung der Fette und Oele im Abwasser wird gelöst von einer Anlage mit den kennzeichnenden Merkmalen des abhängigen Patentanspruches 7.

In den Zeichnungen wird sowohl eine Anlage zum blossen Beseitigen von Fetten und Oelen wie auch eine spezifische Anlage zum Abscheiden und nachfolgenden Beseitigen von Fetten und Oelen in Abwässern gezeigt. Anhand dieser beispielsweisen Ausführungen werden diese Anlagen nachfolgend im einzelnen beschrieben und ihre Funktion wird erläutert.

Es zeigt:
- Figur 1:: Eine Anlage zum Beseitigen von Fetten und Oelen in einer perspektivischen Ansicht, teilweise aufgeschnitten;
- Figur 2: Eine Anlage zum Abscheiden und nachfolgenden Beseitigen von Fetten und Oelen in Abwässern in einer perspektivischen Ansicht, teilweise aufgeschnitten;
- Figur 3:: Die Anlage gemäss Figur 2 von der Seite her gesehen schematisch, in einem Schnitt längs der Ebene A-A in Figur 2;
- Figur 4:: Die Anlage gemäss Figur 2 von links her gesehen schematisch, in einem Schnitt längs der Ebene C-C in Figur 2;
- Figur 5:: Die Anlage gemäss Figur 2 von der Seite her gesehen schematisch, in einem Schnitt längs der Ebene B-B in Figur 2.

Die Anlage zum Beseitigen von Fetten und Oelen ist wahlweise als Zusatzanlage zu einer bestehenden Fettabscheideanlage gedacht, um das darin abgeschiedene Fett fortlaufend zu beseitigen, oder aber als gesonderte Anlage zum Betrieb einer zentralen Entsorgestation für Abfallfette und -Oele, in denen grosse Mengen von Fettabscheiderinhalten aus regelmässig ausgepumpten Fettabscheidern behandelt werden können. Kernstück der Anlage ist ein Behälterraum mit einem flüssigen Medium darin, in dem ein mikrobiologisches Modul vorhanden ist, das ein Trägermaterial einschliesst, welches mit fett- und öldegradierenden Mikroorganismen besiedelt ist, wobei eine Zudosiereinrichtung es ermöglicht, diesem Behälterraum und somit den darin befindlichen Mikroorganismen Fett und Oel dosiert zuzuführen.

Die Mikroorganismen degradieren sodann das Fett und Oel, wodurch sich der pH-Wert im flüssigen Medium des Behälterraumes absenkt. Wichtig ist dabei, dass die Randbedingungen für eine hohe Aktivität der eingesetzten Mikroorganismen eingehalten werden können. Nebst der dosierten Zufuhr von Fett und Oel wird den Mikroorganismen bedarfsweise auch Luft und Nährlösung zugeführt.

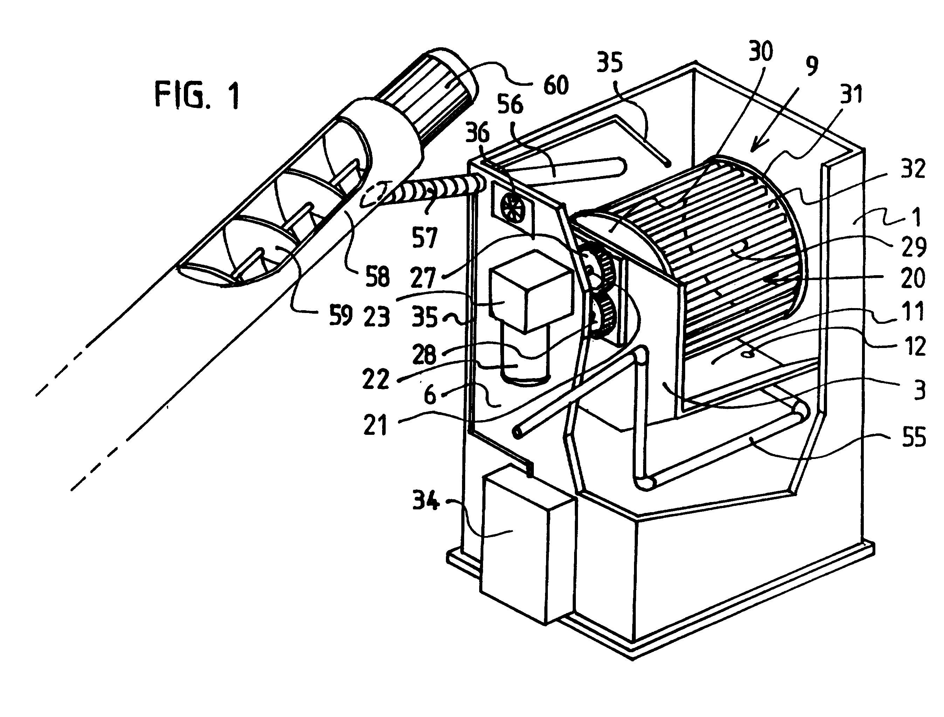

Eine solche Anlage zum Beseitigen von Fetten und Oelen besteht wie hier als Beispiel in Figur 1 gezeigt aus einem viereckigen Behälter 1. Dieser kann aus einem Chromstahl oder aus Kunststoff gebaut sein, wobei sich Polypropylen besonders gut eignet, da es resistent gegen Fettsäuren ist und ihm auch tiefe pH-Werte nichts anhaben können. Somit ist auch auf Dauer mit keinen Korrosionsproblemen zu rechnen. Der Behälter 1 weist in seinem Inneren einen von der Trennwand 3 abgetrennten Behälterraum 9 auf, der das mikrobiologische Modul in Form einer Trommel 20 enthält, und der im Betrieb bis zur Trommelachse von einem flüssigen Medium gefüllt ist. Die Unterseite dieses Behälterraumes 9 bildet einen gegen hinten abfallenden Kännel 11. Hinten hat der Behälter 9 in diesem Kännel 11 einen Ablauf 12. Dieser führt in ein Ueberlaufrohr 55, welches aus dem Behälter 1 herausführt, wobei seine innere Unterkante beim Auslauf das Niveau des Mediums im Behälterraum 9 definiert. Auf der Seite 6 des Behälters 1 ist ein Elektromotor 22 mit Winkelgetriebe 23 angeordnet, dessen Antriebswelle 21 über zwei übereinanderliegende Zahnräder 27,28 die Trommel 20 dreht. Das Flüssigkeitsniveau im Behälterraum 9 reicht dabei bis zur Achse des unteren Zahnrades 28. Damit ist sichergestellt, dass die Trommellager geschmiert sind und der Behälter 1 stets dicht bleibt, denn die Antriebswelle 21 durchsetzt die Behälterwand 6 oberhalb des Pegelstandes der Flüssigkeit. Die Trommel 20 weist auf beiden Seiten eine Trommelscheibe 30,31 auf, und diese Trommelscheiben sind längs des Umfangs der Scheiben mit Kunststoffrohren 32 oder Kunststoff-Rundstäben verbunden, sodass eine Gittertrommel 20 gebildet ist. Diese Gittertrommel kann innen durch weitere Kunststoffstäbe in Abteile unterteilt sein. Sie wird für den Betrieb der Anlage mit Trägermaterialien für fett- und öldegradierende Mikroorganismen befüllt. Die Trägermaterialien mit den darauf besiedelten Mikroorganismen werden mit der Trommel 20 abwechslungsweise durch das fettbelastete Wasser und Medium, dessen Pegelstand ja bis etwa zur Mitte der Trommelwelle 29 reicht, und dann wieder durch die Luft oberhalb des Pegels gedreht. Dabei nehmen sie Oel und Fett auf, das von den Mikroorganismen degradiert wird, wie das noch beschrieben wird. In der Seitenwand 6 ist ein Ventilator 36 mit Rückschlagklappe eingebaut, der das Einblasen von Luft in das Behälterinnere erlaubt, weil die eingesetzten Mikroorganismen aerob sind und einer Luftzufuhr bedürfen. Die Abluft wird im Innern des Behälters 1 durch ein auf der Oberseite des Ueberlaufrohres 55 an dessen oberster Stelle vorhandenes Loch geblasen, oder durch einen speziellen, hier nicht eingezeichneten Geruchfilter nach aussen geblasen. Die Zudosiereinrichtung für das Fett und Oel ist im gezeigten Beispiel wie folgt realisiert: Am Behälter 1 ist ein Einlaufrohr 56 aus säurebeständigem Kunststoff für das zugeführte und zu degradierende Oel und Fett vorhanden, das geneigt in das Behälterinnere führt und dort über dem Behälterraum 9 mündet. Von der Behälterwand 6 aus ist das Kunststoff-Rohr 57 flexibel ausgeführt und ist an der Unterseite eines Kunststoff-Rohres 58 mit grösserem Durchmesser angeschlossen, in dessen Innerem eine Archimedes-Schraube 59 angeordnet ist, die eine Welle aus Chromstahl aufweist und sonst ebenfalls aus säurebeständigem Kunststoff ausgeführt ist. Diese Welle wird von einem gesonderten Motor 60 angetrieben, der zum Beispiel wie hier gezeigt am oberen Ende des Rohres 58 angeordnet sein kann. Das Rohr 58 kann nun mit seinem unteren Ende geruchsdicht in eine bestehende Fettabscheideranlage geführt werden, wobei sein unterer Mündungsrand dort gerade etwas unterhalb des Pegelstandes in der Fettabscheideanlage zu liegen kommen soll. Das Rohr 58 wird dabei je nach Situation mittels einer hier nicht dargestellten Halterung befestigt. Bedarfsweise kann nun der Motor 60 eingeschaltet werden, wobei die Archimedes-Schraube 59 Oel und Fett im Rohr 58 aufwärts fördert, das dann über das Rohr 57,56 in den Behälterraum 9 gelangt und dort vom mikrobiologischen Modul beseitigt wird. Die dabei entstehenden Stoffwechselprodukte werden über die Leitung 55 aus dem Behälter 1 hinaus und zurück in den Fettabscheider geleitet. Falls die mit dem Fett und Oel zugeführte Wärme sowie die Umgebungswärme nicht ausreicht, um eine genügende Temperatur für die Aktivität der Mikroorganismen sicherzustellen, kann eine Heizeinrichtung im Behälterraum 9 vorgesehen werden, zum Beispiel in Form einer Heizschlange. Unterhalb des Motors 22 ist ein Kasten 34 mit Türe angebaut, in dem eine Dosierpumpe untergebracht ist. Weiter befindet sich in diesem Kasten ein Behälter für ein Nährmittel, das den Mikroorganismen dosiert zugeführt wird. Hierzu führt ein Schlauch oder eine Rohrleitung 35 von diesem Kasten 34 aus in das Behälterinnere und dort zum Trommelbehälter 9, wo die Rohrleitung über der Trommel 20 mündet. Auf der hier nicht einsehbaren Rückseite der Anlage ist ein Schaltkasten angebaut, in dem eine speicherprogrammierbare elektrische Steuerung für die Motoren 22,60, den Ventilator 36 und die Dosierpumpe untergebracht ist. Die Anlage wird oben durch einen hier nicht eingezeichneten Deckel, der auf einer Gummidichtung lagert, dicht verschlossen. Nirgends können somit üble Gerüche nach aussen treten, denn wenn der Ventilator 36 nicht läuft, verschliesst die Rückschlagklappe den Behälter 1, und wenn er läuft, vermag gegen die Ventilatorluft keine Luft mit Geruchsträgern von innen nach aussen zu strömen. Der Deckel der Anlage kann scharnierend ausgeführt sein, wobei er dann vorteilhaft mit Gasfedern abgestützt ist und am freien Ende mittels Schnallen fest verschlossen werden kann. Mit einer solchen Ausführung kann die Anlage zu Wartungszwecken leicht geöffnet und wieder geruchsdicht verschlossen werden. Eine derartige Anlage kann dem Prinzip nach in verschiedensten Dimensionen und auch mit anderen technischen Lösungen ausgeführt werden. Die Zusdosiereinrichtung kann zum Beispiel mittels einer Pumpe realisiert werden und die Luftzufuhr kann als Alternative dadurch erfolgen, dass mit Hilfe von Luftsieben kleine Mikrobläschen von unten in den Behälterraum 9 eingeblasen werden, indem das Trägermaterial für die Mikroorganismen schwimmt. In diesem Fall kann eine drehende Trommel entfallen. Im Bedarfsfall können mehrere Anlage-Einheiten parallel geschaltet eingesetzt werden, um die nötige Kapazität für die Fett- und Oeldegradation zu erreichen.

Die Anlage zum Abscheiden und nachfolgenden Beseitigen von Fetten und Oelen in Abwässern arbeitet zusätzlich selbst als Fettabscheider, indem die mit dem Abwasser eingetragenen abscheidbaren Fette und Oele aufgrund der Schwerkraft im Abwasser aufschwimmen und somit an der Wasseroberfläche eine Fett- und Odschicht bilden. In gleicher Weise wird dann das abgeschiedene Fett- und Oel einem mikrobiologischen Modul dosiert zugeführt, und die Fette und Oele werden dort mikrobiologisch degradiert. Zusätzlich kann die Anlage noch über Einrichtungen verfügen, um schwer abscheidbare Partikel durch deren Akkumulation zum Aufschimmen zu bringen, und weiter kann das soweit behandelte Abwasser zwangsweise durch spezielles Material durchströmen, zu welchem die Fett- und Oelpartikel eine besondere Affinität aufweisen und sie aufsaugen.

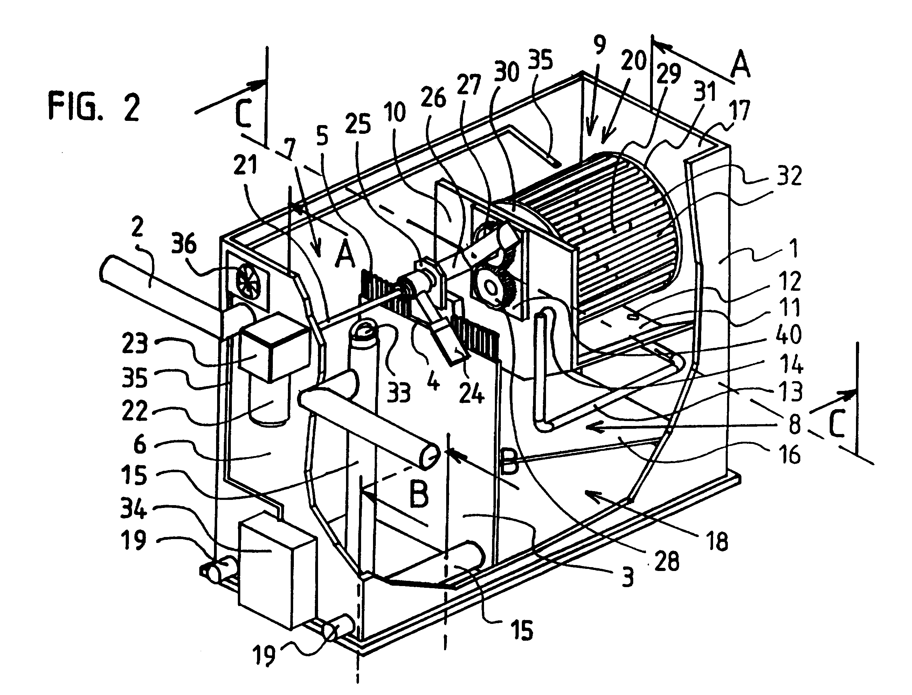

Im folgenden soll die Anlage zum Abscheiden und nachfolgenden Beseitigen des abgeschiedenen Fettes, wie sie in Figur 2 dargestellt ist, beschrieben werden. Sie besteht aus einem viereckigen Behälter 1. Dieser kann aus einem Chromstahl oder aus Kunststoff gebaut sein, wobei sich Polypropylen besonders gut eignet, da es resistent gegen Fettsäuren ist und ihm auch tiefe pH-Werte nichts anhaben können. Somit ist auch auf Dauer mit keinen Korrosionsproblemen zu rechnen. Bei der im Bild gezeigten Anlage handelt es sich um eine, die für eine Küche mit einer Kapazität von etwa 400 Essen pro Tag dimensioniert ist. Sie ist 1.30m lang, 0.70m breit und 1.50m hoch und fasst etwa 900 Liter Abwasser. Diese Anlagen-Dimension ist die weitaus am meisten benötigte und für eine solche Küchenkapazität ist die Anlage so kompakt, dass sie zum nachträglichen Einbau in einem Kellergeschoss auch durch einen relativ engen Treppenabgang, wie er in alten Gebäuden oft anzutreffen ist, problemlos transportiert werden kann. Es versteht sich, dass die Anlage für andere Küchenkapazitäten entsprechend grösser dimensioniert werden kann. Das nötige Fassungsvermögen der Anlage wird gemäss den Erfahrungswerten für konventionelle Fettabscheider bestimmt und muss sicherstellen, dass auch bei grossem Schwallwasseranfall das Abwasser in der Anlage eine genügende mittlere Verweilzeit aufweist, damit die abscheidbaren Fette und Oele aufschwimmen können. In den Behälter 1 führt das Einlaufrohr 2, durch welches das fettbelastete Abwasser in den Behälter 1 strömt. Im Behälterinnern ist eine erste Trennwand 3 angeordnet, deren Oberkante 4 mit einer Art Kamm 5 ausgerüstet ist. Der ganze Behälterraum 7 des Behälters 1 zwischen der Seitenwand 6 und der Trennwand 3 ist im Betrieb mit Abwasser gefüllt. In diesem Behälterteil 7 schwimmen die abscheidbaren Fett- und Oelanteile auf und bilden an der Wasseroberfläche eine Schicht. Diese Oel- und Fettschicht überströmt im Betrieb die Kante 4 durch den Kamm 5, sodass in erster Linie die Fette und Oele in den Raum jenseits der Trennwand 3 gelangen. Der Kamm 5 hält dabei allfällig aufschwimmende Feststoffe zurück. Mit den Fetten und Oelen strömt natürlich auch Abwasser über die Trennwand 3. Das jeweils überströmende Volumen entspricht dem gerade durch das Einlaufrohr 2 einströmenden Volumen. Im hinter der Trennwand 3 befindlichen Behälterraum 8 erfolgt erneut eine Abscheidung der noch im Abwasser schwebenden abscheidbaren Fette und Oele. In diesem Behälterraum 8 von oben eingebaut befindet sich ein gegenüber dem Behälterraum 8 abgedichteter, gesonderter Behälterraum 9 mit einer Trennwand 10, welcher ein mikrobiologisches Modul in Form einer Trommel 20 enthält. Die Unterseite dieses Behälterraumes 9 bildet einen gegen hinten abfallenden Kännel 11. Hinten hat der Behälter 9 in diesem Kännel 11 einen Ablauf 12. Dieser führt in ein Ueberlaufrohr 13 und über dieses zurück in den Behälter 8, wobei die Mündung 14 des Ueberlaufrohres 13 einige Zentimeter oberhalb des Niveaus der Unterkante des Abflussrohres 15 des Behälters 1 angeordnet ist. Unterhalb des Kännels 11 weist der Behälterraum 8 einen nach hinten geneigten Boden 16 auf, der an den hinteren Ecken Ausnehmungen aufweist oder über seine ganze Breite von der Seitenwand 17 des Behälters 1 beabstandet ist. Der Raum 18 unterhalb des geneigten Bodens 16 ist hier frei und von ihm aus führt das Abflussrohr 15 durch die Trennwand 3 in den Behälterraum 7, in diesem nach oben und von dort auf einem Niveau, das geringfügig unterhalb vom Niveau des Zulaufrohrs 2 liegt, nach aussen. Der Behälterraum 7 wirkt als Schlammfang und Sinkraum für allfällige Feststoffe, die mit dem Abwasser in die Anlage gelangen. Diese angesammelten Schlämme und Feststoffe können über die Ablass-Leitungen 19 von Zeit zu Zeit abgelassen werden. Falls zum Ablassen kein weiteres Gefälle vorhanden ist, wird an der Ablassleitung 19 eine Pumpe angeschlossen. Längs durch die Behälterräume 7 und 8 bis hin zur Trennwand 10 des Behälters 9 erstreckt sich eine Antriebswelle 21, die aus Edelstahl gefertigt ist. Sie wird angetrieben von einem Elektromotor 22 mit Winkelgetriebe 23. Im Bereich des Behälterraumes 3 ist an diese Welle 21 ein Rührarm 24 angebaut. Einer oder mehrere solcher Rührarme, die sich mit der Achse 21 mitdrehen, halten dadurch die obere Schicht von Fett, Oel und Wasser im Behälterraum 7 ständig in Bewegung. Es hat sich gezeigt, dass diese Massnahme dem Aufschwimmen der Fette und Oele einerseits, sowie dem Absinken der Feststoffe und Schlämme andrerseits, sehr förderlich ist. In der Mitte ist auf der Trennwand 3 ein Zwischenlager 25 für die Welle 21 montiert. Im Bereich des Behälterraumes 8, das heisst zwischen der Trennwand 3 und der Trennwand 10 des Behälters 9 ist an der Antriebswelle 21 ein Schöpfrohr 26 angebaut, dessen Funktion noch erklärt wird. Am Ende der Welle 21 ist ein Kunststoff-Zahnrad 27 auf einer Verstärkungsplatte 40 an der Trennwand 10 montiert. Dieses greift in ein gleichgrosses, darunter angeordnetes Zahnrad 28 ein. Dieses Zahnrad 28 ist mit einer Welle 29 aus Kunststoff verbunden, welche die Trommelachse einer Trommel 20 bildet, die sich im Behälterraum 9 befindet. Diese Trommel 20 weist auf beiden Seiten eine Trommelscheibe 30,31 auf, und diese Trommelscheiben sind längs des Umfangs der Scheiben mit Kunststoffrohren 32 oder Kunststoff-Rundstäben verbunden, sodass eine Gittertrommel 20 gebildet ist. Diese Gittertrommel kann innen durch weitere Kunststoffstäbe in Abteile unterteilt sein. Sie wird für den Betrieb der Anlage mit Trägermaterialien für Mikroorganismen befüllt, wie das noch beschrieben wird, und die Trommel 20 dreht dann diese Trägermaterialien mit den darauf besiedelten Mikroorganismen abwechslungsweise durch das fettbelastete Wasser, dessen Pegelstand bis etwa zur Mitte der Trommelwelle 29 reicht, und dann wieder durch die Luft oberhalb des Pegels. Der Motor zum Drehen der Trommel weist für diese Dimension eines Fettabscheiders für eine Küche mit einer Kapazität von 400 Essen pro Tag eine Leistung von 370 Watt auf. Entsprechend werden pro Tag (im 24 Stunden-Betrieb) ca. 9kWh elektrische Energie benötigt. In der Seitenwand 6 ist ein Ventilator 36 mit Rückschlagklappe eingebaut, der das Einblasen von Luft in das Behälterinnere erlaubt, weil die eingesetzten Mikroorganismen aerob sind und einer Luftzufuhr bedürfen. Die Abluft wird durch ein auf der Oberseite des Abflussrohres 15 an dessen höchster Stelle vorhandenes Loch 33 in die Kanalisation geblasen, oder durch einen speziellen, hier nicht eingezeichneten Geruchfilter nach aussen geblasen. Falls die mit dem Fett und Oel zugeführte Wärme sowie die Umgebungswärme nicht ausreicht, um eine genügende Temperatur für die Aktivität der Mikroorganismen sicherzustellen, kann eine Heizeinrichtung für die Behälterräume 7,8 und insbesondere 9 vorgesehen werden, zum Beispiel in Form einer Heizschlange. Unterhalb des Motors 22 ist ein Kasten 34 mit Türe angebaut, in dem eine Dosierpumpe untergebracht ist. Weiter befindet sich in diesem Kasten ein Behälter für ein Nährmittel, das den Mikroorganismen dosiert zugeführt wird. Hierzu führt ein Schlauch oder eine Rohrleitung 35 von diesem Kasten aus in das Behälterinnere und dort zum Trommelbehälter 9, wo die Rohrleitung 35 über der Trommel 20 mündet. Auf der hier nicht einsehbaren Rückseite der Anlage ist ein Schaltkasten angebaut, in dem eine speicherprogrammierbare elektrische Steuerung für den Motor 22, den Ventilator 36 und die Dosierpumpe untergebracht ist. Die Funktion der Steuerung wird später noch erklärt. Die Anlage wird oben durch einen hier nicht eingezeichneten Deckel, der auf einer Gummidichtung lagert, dicht verschlossen. Nirgends können üble Gerüche nach aussen treten, denn wenn der Venitilator 36 nicht läuft, verschliesst die Rückschlagklappe den Behälter, und wenn er läuft, vermag gegen die Ventilatorluft keine Luft mit Geruchsträgern von innen nach aussen zu strömen. Der Deckel der Anlage kann scharnierend ausgeführt sein, wobei er dann vorteilhaft mit Gasfedern abgestützt ist und am freien Ende mittels Schnallen fest verschlossen werden kann. Mit einer solchen Ausführung kann die Anlage zu Wartungszwecken leicht geöffnet und wieder geruchsdicht verschlossen werden.

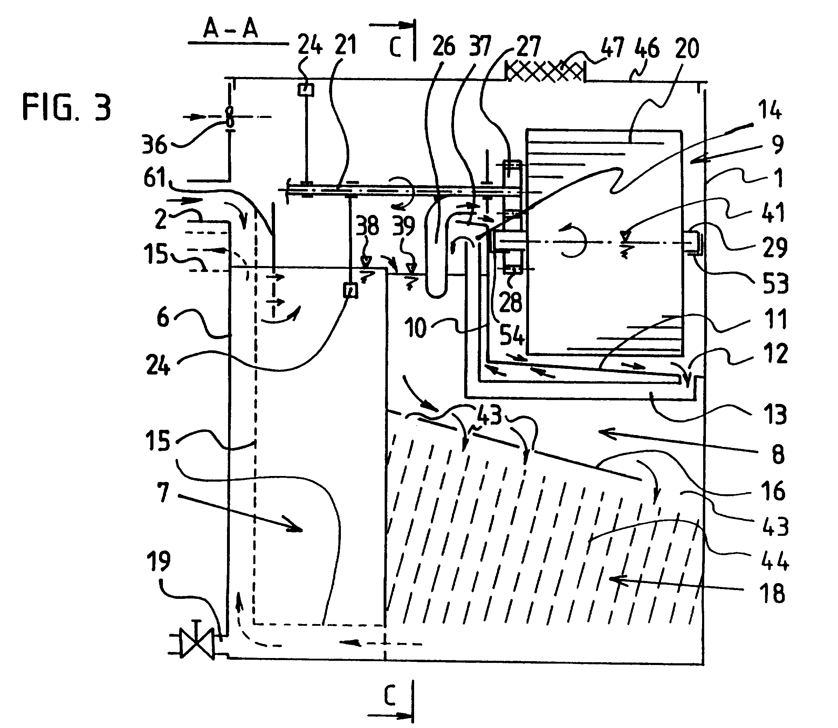

Die Figur 3 zeigt die Anlage gemäss Figur 2 in einer Schnittansicht von der Längsseite her gesehen. Die einzelnen Teile sind hier schematisiert dargestellt und die Figur zeigt einen Schnitt durch die Anlage längs der Ebene A-A in Figur 2. Die Anlage weist einen Deckel 46 auf, der auf einer Gummidichtung lagert. In diesem Deckel ist hier ein Geruchfilter 47 eingebaut. Links oben im Bild ist der Ventilator 36 angedeutet, der in die Behälterwand 6 eingebaut ist. Dieser bläst die Luft zum Beispiel über ein hier nicht dargestelltes Rohr von unten in ein Gitter, in dem ein in dieses Gitter passendes Stück Styropor liegt. Bläst der Ventilator, so wird das Styroporstück angehoben und die Luft kann durch das Gitter in das Behälterinnere gelangen. Bläst der Ventilator nicht, so liegt das Styroporstück auf der Ventilatorrohrmündung auf und verschliesst sie. Unter dem Ventilator 36 ist das Einlaufrohr 2 dargestellt. Durch das Einlaufrohr 2 läuft das fett- und ölbelastete Abwasser in den ersten Behälterraum 7, wobei vor der Mündung des Einlaufrohres eine Prallwand 61 angeordnet ist. Diese verhindert, dass sich bei einem Schwall von einlaufendem Abwasser an der Flüssigkeitsoberfläche im Behälterraum 7 eine Welle bildet, mit der übermässig viel Wasser über die Oberkante 4 der Trennwand 3 in den nächsten Behälterraum 8 laufen würde. Vielmehr soll die Prallwand 61 sicherstellen, dass aus dem frisch einlaufenden Abwasser im Behälterraum 7 zunächst die Feststoffe und Schlämme absinken und nur die zuvor aufgeschwommene oberste Schicht, die nebst Wasser vorallem aus Fett und Oel besteht, über die Oberkante 4 in den nächsten Behälterraum 8 fliesst. Die Antriebswelle 21 trägt im Bereich des Behälterraumes 7 zwei Rührarme 24, welche die obere Schicht der Flüssigkeit ständig in Bewegung halten. Der Pegelstand in diesem Behälterraum 7 ist mit einem Dreieck 38 eingezeichnet und wird von der Oberkante 4 der Trennwand 3 definiert. Ueber diese Kante 4 läuft das aufgeschwommene Fett und Oel zusammen mit Wasser in den nächsten Behälterraum 8. Mit dem Dreieck 39 ist der etwas niedrigere Pegelstand in diesem Behälterraum 8 dargestellt. Im Bereich des Behälterraumes 8 trägt die Antriebswelle 21 das Schöpfrohr 26, das exzentrisch an der Antriebswelle 21 befestigt ist. Durch die Trennwand 10 des Trommelbehälters 9 führt oben ein Einleitkanal 37. Wenn sich das Schöpfrohr 26 mit der Welle 21 dreht, schöpft es mit seiner im Bild gegen hinten gerichteten Einlaufmündung eine Portion Fett, Oel und Wasser. Dreht das Schöpfrohr 26 aus der gezeigten Position weiter gegen hinten und dann aufwärts, so fliesst die geschöpfte Flüssigkeitsmenge im Schöpfrohr 26 gegen seine Ausgussmundung hin und wird dann, wenn das Schopfrohr 26 auf der Welle 21 gegen aufwärts ragt, auf den Einlaufkanal 37 gegossen, über den sie in das Innere des Trommelbehälters 9 fliesst. Die Antriebswelle 21 treibt über das Zahnrad 27 und das darunterliegende Zahnrad 28 die Trommel 20 an und hält diese ständig in Drehung. Im Unterschied zur Figur 2 sind hier die Zahnräder 27,28 als Variante im Innern des Trommelbehälters 9 angeordnet, statt vor der Trennwand 10. Auf beiden Seiten ist die Trommelwelle 29 auf einem Kunststofflager 53,54 gelagert. Das Zahnrad 27 kann auf der Antriebswelle 21 etwas gegen diese hin verschoben werden, sodass danach die Trommel 20 leicht aus den Lagern 53,54 herausgehoben und somit aus dem Trommelbehälter 9 entfernt werden kann. Im Trommelbehälter 9 ist der Pegelstand durch das Dreieck 41 angezeigt. Wie man sieht, reicht der Pegelstand etwa bis zur Mitte der Welle 29, welche die Trommel 20 trägt. Dadurch wird sichergestellt, dass die Lager 53,54 der Trommelwelle 29 durch die Flüssigkeit geschmiert werden. Der Trommelbehälter 9 hat unten einen Boden, der einen geneigten Kännel 11 bildet. Vom Ablauf 12 im Kännel 11 führt ein Ueberlaufrohr 13 unter dem Trommelbehälter 9 zurück und dann aufwärts bis zur Achsenhöhe der Trommelwelle 29. Diese Mündung 14 des Ueberlaufrohres 13 definiert den Pegelstand 41 im Trommelbehälter 9. Unterhalb des Trommelbehälters 9 ist ein geneigter Boden 16 in den Behälter 1 eingebaut, der Ausnehmungen 43 in Form von Löchern oder Schlitzen aufweist. Im hier gezeigten Bild sind unterhalb des Bodens 16 schräg nach oben verlaufende Lamellen 44 eingebaut, die eine für Fett und Oel affine Oberfläche aufweisen. Sie sind in einer Vielzahl nahe nebeneinander angeordnet und erstrecken sich über die ganze Innenbreite des Behälters 1. Vom Bereich dieser Lamellen 44, der den Behälterraum 18 bildet, führt ein Ablaufrohr 15 durch die Trennwand 3 hindurch und dann nach oben, wo es durch die Behälterwand 6 nach aussen führt. Die Unterkante des Ablaufrohres 15 an der Stelle, wo es durch die Behälterwand 6 geführt ist, definiert den Pegelstand 39 im Behälterraum 8. Unten links am Behälter 1 sieht man noch eine Ablass-Leitung 19 mit Hahn für die Schlämme und Feststoffe, die sich im Behälterraum 7 ansammeln.

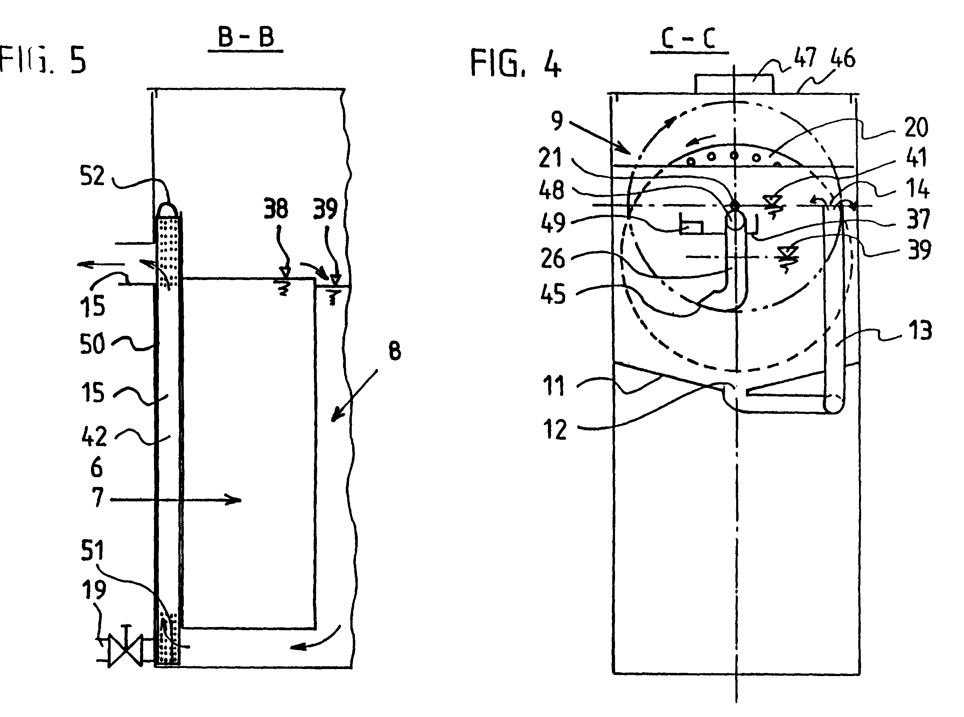

In Figur 4 ist die Anlage in schematischer Darstellung in einem Schnitt längs der Ebene C-C in Figur 2 gezeigt. Diese Darstellung hilft zu verstehen, wie das Schöpfrohr 26 funktioniert. Das Schöpfrohr 26 sitzt exzentrisch auf der Antriebswelle 21. Die Einlaufmündung 45 des Schöpfrohres 26 beschreibt dabei den eingezeichneten Kreis. Der etwas weiter unten eingezeichnete Kreis deutet den Umfang der Trommel 20 an. Die Ausgussmundung 48 des Schöpfrohrs 26 ist gegen hinten in Richtung der Antriebsachse 21 gerichtet. Unterhalb dieser Ausgussmündung 48 des Schöpfrohres 26 ist der Einleitkanal 37 zu sehen, der durch die Oeffnung 49 in den Trommelbehälter 9 führt. Die Antriebsachse 21 kann nun beidseits drehen. Dreht sie im gezeigten Bild im Uhrzeigersinn, so taucht das Schöpfrohr 26 mit seiner Einlaufmündung 45 in das im Behälterraum 8 abgeschiedene und aufgeschwommene Oel und Fett und schöpft davon eine Portion ab, wobei diese Portion auch Wasser enthalten mag. Mit dem Dreieck 39 ist der Pegelstand im Behälterraum 8 angedeutet. Dreht nun das Schöpfrohr 26 im Uhrzeigersinn weiter, so fliesst die geschöpfte Portion im Schöpfrohr 26 zu seiner Ausgussmündung 48 und wird schliesslich auf den Einleitkanal 37 ausgegossen, über den das Fett, Oel und Wasser durch die Oeffnung 49 in den Trommelbehälter 9 fliesst. Die Antriebswelle 21 treibt gleichzeitig die Trommel 20 an und hält sie in Drehung. Weil sie über die zwei hier nicht eingezeichneten Zahnräder angetrieben wird, dreht sie sich in umgekehrtem Drehsinn zur Antriebswelle 21. Dreht sich nun die Antriebswelle 21 im gezeigten Bild hingegen im Gegenuhrzeigersinn, so schöpft das Schöpfrohr 26 nichts und die Trommel 21 dreht sich entsprechend im Uhrzeigersinn. Mit der zeitweisen Umschaltung des Drehsinns kann in höchst einfacher Weise bei ständig drehender Trommel ab und zu portionenweise Fett und Oel in den Behälterraum 9 mit der Trommel 20 geschöpft werden. Rechts im Bild sieht man das Ueberlaufrohr 13, dessen Mündung 14 den Pegelstand 41 im Trommelbehälter 9 definiert. Unterhalb der Trommel 20 ist der nach hinten abwärts geneigte Kännel 11 eingezeichnet, welcher den unteren Boden des Trommelbehälters 9 bildet. An der tiefsten Stelle befindet sich der Ablauf 12, der in das Ueberlaufiohr 13 führt. Die Anlage weist einen Deckel 46 auf, der auf einer Gummidichtung lagert und in den hier ein Geruchfilter 47 eingebaut ist.

In Figur 5 ist ein Teilschnitt längs der Ebene B-B von Figur 2 dargestellt. Gezeigt ist hier das Niveau 38 im Behälterraum 7, das geringfügig höher ist als der Pegelstand 39 im anschliessenden Behälterraum 8, von dem das Fett und Oel abgeschöpft wird. In den senkrechten Teil des Ablaufrohres 15 ist hier ein passgenaues Rohr 50 mit Boden 51 gesteckt, das unten und oben durchlässig ist, in dem es dort wie dargestellt zum Beispiel perforiert ist. Oben ist das Rohr 50 mit einem Griff 52 ausgestattet. Sein Inneres ist gefüllt mit einem speziellen Material 42, das die Fähigkeit hat, Fett zu akkumulieren beziehungsweise aufzusaugen. Als Füllmaterial eignet sich zum Beispiel das Produkt MELT-BLOWN, ein Textilverbundstoff aus Polypropylen in Granulatform oder als Band, hergestellt durch die Firma ECOTEXTIL, 277 11 Horñátky un Neratovic, Tschechische Republik. Ein Gramm dieses Stoffes vermag etwa 12 bis 18 Gramm Fett zu akkumulieren. Beim Durchströmen des Rohres 50 werden somit die noch nicht abgeschiedenen oder auch nicht abscheidbare Fett- und Oelpartikel von diesem Material weitgehend eingefangen und zurückgehalten. Wenn die Kapazität des Materials erschöpft ist, kann das Rohr 50 am Griff 52 herausgezogen werden. Das Material wird dann ausgeleert und durch neues ersetzt. Das öl- und fetthaltige Material wird recykliert, indem es ausgepresst oder zentrifugiert wird. Zusätzlich können Lösungsmittel zum Extrahieren der Fett- und Oelstoffe verwendet werden. Das durch die Recyklierung anfallende Fett und Oel kann in den Behälterraum 8 der Anlage gegeben werden.

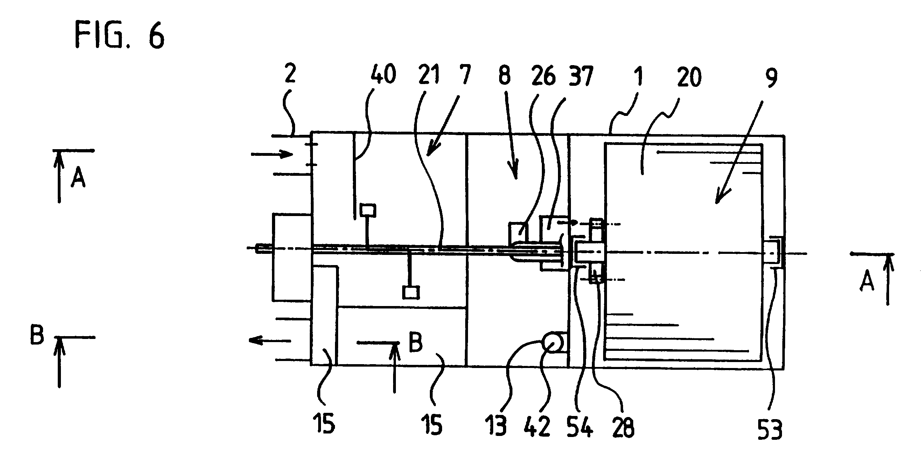

Die Figur 6 zeigt die Anlage von oben gesehen. Alle mit Ziffern bezeichneten Teile wurden bereits zu den anderen Figuren beschrieben. Im Unterschied zu Figur 2 ist hier das Ablaufrohr 15 als viereckiger Ablaufkanal ausgebildet.

Diese Anlage gemäss Figur 2 bis 6 wirkt nicht nur als Fettabscheider, sondern sie beseitigt das abgeschiedene Fett und Oel mittels des mikrobiologischen Moduls, das nun genauer beschrieben und erläutert wird. Das Modul besteht aus dem vom eigentlichen Fettabscheider funktional abgetrennten Trommelbehälter 9 und der in diesem Behälter drehenden Trommel 20. Diese Trommel 20 ist mit Trägermaterial für spezielle fett- und öldegradierende Mikroorganismen gefüllt. Diese aeroben Mikroorganismen besiedeln dieses Trägermaterial und bei Drehung der Trommel 20 tauchen sie immer wieder in die Flüssigkeit, in der sich die Trommel 20 dreht, nehmen dort Oel und Fett auf und tauchen wieder aus dieser Flüssigkeit auf, bewegen sich dann durch die Luft und werden von dieser mit Sauerstoff versorgt. Dabei degradieren sie die Fette und Oele. Anlagentechnisch ist es sehr wichtig, dass dieser Degradationsprozess unter ständig etwa gleichen Bedingungen erfolgen kann, das heisst in einer bestimmten Bandbreite für die Temperatur und den pH-Wert des flüssigen Mediums im Trommelbehälter 9. Hierzu ist es wichtig, dass die pro Zeit zugeführte Menge von Fett und Oel sich in einer bestimmten Bandbreite bewegt und am besten etwa konstant gehalten wird. Das ist der wesentliche Kern für das erfolgreiche Funktionieren einer mikrobiologischen Degradation in einer solchen Anlage. Die Lösung zur Sicherstellung dieser Randbedingungen ist dadurch realisiert, dass die Mikroorganismen in der besagten Trommel in einem vom eigentlichen Fettabscheider getrennten Behälter wirken, indem die nötigen Bedingungen über die Zeit ständig aufrechterhalten werden können. Diesem mikrobiologischen Modul wird im wesentlichen nur das zu degradierende Fett und Oel zugeführt, wenngleich dabei auch etwas Wasser mit zugeführt wird. Das bei der Degradation entstehende Wasser weist einen tiefen pH-Wert auf und wird durch die Ueberlaufleitung 13 in den Behälterraum 8 des Fettabscheiders geführt, wo es sich mit der dort befindlichen grossen Wassermenge vermischt, sodass sein geringer pH-Wert praktisch keinen Einfluss auf den pH-Wert im Behälterraum 8 nach der Vermischung hat. Durch die Abtrennung des Trommelbehälters 9 vom restlichen Teil der Anlage wird auch ein Puffer für die Temperaturschwankungen gebildet. Wenn ein Schwall von heissem Wasser aus dem Geschirrspüler in die Anlage einfliesst, so hat das praktisch keinen Einfluss auf die Temperatur im Trommelbehälter 9. Auch die Menge an zugeführtem Fett und Oel wird dadurch nicht beeinflusst. Mit der elektrischen Steuerung richtet man es so ein, dass die Trommel 20 ständig dreht, wobei auch die Rührarme 24 und das Schöpfrohr 26 ständig drehen. Das Schöpfrohr 26 schöpft jedoch die meiste Zeit nicht. Mit einer Zeitschaltung wird die elektrische Steuerung so eingestellt bzw. programmiert, dass zum Beispiel in jeder Stunde der Motor angehalten wird, und er dann ein paar Mal in umgekehrter Richtung dreht. Dabei schöpft das Schöpfrohr 26 ein paar Portionen in den Trommelbehälter 9. Wie oft diese Umkehrung des Drehsinnes erfolgt und wie viele Male das Schöpfrohr 26 jeweils schöpfen soll, wird von Fall zu Fall an die Betriebsbedingungen der jeweiligen Küche angepasst und mit der elektrischen Steuerung programmiert. Das gleiche ist der Fall für den Ventilator 36. Dieser braucht nicht ständig zu laufen, sondern kann je nach der geforderten Aktivität der Mikroorganismen von Zeit zu Zeit für eine Weile programmgesteuert eingeschaltet werden. Weiter gilt das auch für die Dosierpumpe zum Zuführen von zusätzlicher Nährlösung für die Mikroorganismen in der Trommel 20.

Die spezifisch mikrobiologischen Aspekte dieser Fett- und Oel-Degradation werden nachfolgend offenbart: Die Zahl der die Enzyme produzierenden Mikroorganismen, welche die Esterbindungen der Triazylglyzerine hydrolysieren, d.h. der Öle und Fette, ist bedeutend. Diese Enzyme werden als Lipasen (Triazylglyzerin der Azylhydrolase, EC 3.1.1.3) bezeichnet. In der Nahrungsmittelindustrie sowie in der chemischen Industrie werden Lipasen in reiner Form (entkapselt oder immobilisiert) üblicherweise zur Hydrolyse der Triazylglyzerine benutzt. Zu den Mikroorganismen, welche die bedeutenden Lipasenproduzenten darstellen, gehören lipolytische Hefen, die biotechnologisch sehr oft ausgenutzt werden. Ihre lipolytischen Enzyme sind artenspezifisch. Sie können durch verschiedene Triazylglyzerine oder Ölsäure induziert werden. Die Lipasensynthese bei lipolytischen Hefen wird durch die gewählte Stickstoffquelle sowie durch das Vorhandensein von Zitrat häufig positiv beeinflußt. Die Zitronensäure und in einigen Fällen auch die Isozitronensäure stellen Hauptstoffwechselprodukte bei der Ausnutzung von Kohlenwasserstoffen, Ölen und Fetten als Nahrungsquelle für diese Mikroorganismen dar. Die Anhäufung dieser Stoffwechselprodukte im Kultivierungsmedium ruft dessen rasche Azidifikation hervor. Als besonders geeigneter Mikroorganismus für diese vorliegende Anlage zum Beseitigen von organischen Oelen und Fetten bietet sich die lipolytische Hefe *Yarrowia lipolytica* an, wobei sich der Stamm *Yarrowia lipolytica WI* als besonders geeignet erweist. Nachfolgend werden die morphologischen und physiologischen Eigenschaften dieses Hefen-Stammes *Yarrowia lipolytica WI* beschrieben und erläutert. Der Hefen-Stamm *Yarrowia lipolytica WI* vergärt Maltose, Saccharose, Laktose, Glukose, Galaktose und Raffinose nicht. Er assimiliert keine Nitrate, hingegen assimilert er L-Lysin und Erythritol. Er wächst bei einer Temperatur von zwischen 5°C und 35°C. Im flüssigen Nährmedium mit Ölsäure als einzige Kohlenstoffquelle bildet er ellipsenförmige bis ovale Zellen. Nach 120 bis 142 Stunden Kultivierung bildet er Pseudomyzelium und echtes Myzelium. Es erfolgt keine Pigmentation. Zum Wachstum im synthetischen Medium erfordert er weder das Vorhandensein von Vitaminen noch irgendwelche Wachstumsstimulatoren. Dieser Stamm ist gegen Nystatin empfindlich. Gegen pH-Medium-Veränderungen und Veränderungen der lonenkraft im Medium ist er dagegen wenig empfindlich. Wenn er kurzfristig Extremtemperaturen ausgesetzt ist, sowie bei einem vorübergehenden Sauerstoffdefizit im Medium, überlebt er sehr gut. Er besitzt ein sehr gutes Vermögen, an der Oberfläche der Fett-Teilchen zu haften. Er produziert den Emulsifikationsstoff, der die Oberfläche der degradierten Öle und Fette zur Besiedlung mit Hefe vergrößert. Er besiedelt sehr gut synthetische Träger mit geeignet elektrisch geladener Oberfläche und gegliederter sowie nichtgegliederter Oberflächenstruktur. Bei dieser Hefe *Yarrowia lipolytica*, insbesondere beim Stamm *Yarrowia lipolytica WI* (Harrison) van der Walt et. von Arx handelt es sich um die amorphe Form von *Candida lipolytica* (Harrison), Diddens et. Lodder. Dieser Mikroorganismus wurde aus einem mit Erdöl kontaminierten Boden in der Nähe einer Erdölquelle in Hodonin, Tschechische Republik, isoliert und am 16, April 1996 bei der Tschechischen Sammlung von Mikroorganismen unter der Nummer CCM 4510 deponiert und unter der gleichen Nummer wurde ein Lebensfähigkeitszeugnis ausgestellt. Die Anschrift dieser international anerkannten Hinterlegungsstelle nach dem Budapester Vertrag lautet: CCM - Czech Collection of Microorganisms, Masaryk University, Tvrdého 14, CR-602 00 Brno. Eine Kopie der Empfangsbescheinigung (Receipt in the case of an Original Deposit) und eine Kopie der Lebensfähigkeitsbescheinigung (Viability Statement) sind als Anhang 1 und Anhang 2 der Beschreibung beigefügt.

Die hohe Widerstandsfähigkeit von *Yarrowia lipolytica WI* gegen die Wirkung von Aussenfaktoren, die niedrigen Ansprüche an den Nährstoffgehalt in der Umgebung, die starke Lebensfähigkeit und die hohe lipolytische Aktivität ermöglichen es daher, diesen Mikroorganismus zur Biodegradation von Fetten und Ölen in geschlossenen Behältern sowie zur kontinuierlichen Biodegradation von Ölen, Fetten und Ölemulsionen im Reinigungsprozess von auf diese Weise kontaminierten Abwässern auszunutzen. Zunächst wird der Hefen-Stamm im synthetischen oder organischen Medium unter Anwesenheit von Fettsäuren oder Ölen vermehrt und induziert. Mit der Hefe werden dann synthetische Träger für die Mikroorganismen besiedelt oder diese werden direkt im kontaminierten Abwasser verwendet. Die Degradation der Öle und Fette verläuft unter Zufuhr von Luft und bei einer genügenden Konzentration von Stickstoff, wobei das Verhältnis zwischen dem Kohlenstoff, enthalten im Öl oder Fett in diesem Medium, und dem Stickstoff in den Grenzen der Massenverhältnisse 60 bis 100 :1 einzuhalten ist. Die Optimalbedingungen zum Durchführen des Verfahrens zur Biodegradation von Ölen und Fetten mittels dieser Hefe liegen bei einem pH-Wert des Mediums von zwischen 2,0 bis 5,0 und bei einer Temperatur 20°C bis 35°C. Zur Aufbereitung und Induktion von *Yarrowia lipolytica Wl* eignet es sich, das organische oder synthetische Nährmedium welches eine Stickstoff- und Phosphorquelle bildet, in löslicher Form mit weiteren anorganischen Salzen und Spurenelementen sowie Ölsäure oder Pflanzenöl versetzt zu benutzen. Der pH-Ausgangswert des Kultivierungsmediums kann vorteilhaft mit Zitronensäure auf einen Wert zwischen 3,5 und 4,5 eingestellt werden, Unter intensiver Durchlüftung mit 0,3 bis 1,0 Liter Luft je 1 Liter Medium pro Stunde bei einer Temperatur von 25°C bis 30°C beträgt die Kultivierungsdauer 24 bis 72 Stunden.

Die Endprodukte der Biodegradation der Öle und Fette sind dabei Kohlendioxid (CO₂), Biomasse und Zitronensäure als überwiegender Metabolit. Entstehen können dabei auch andere organische Säuren wie Essig-, Apfel-, Fumar- und Oxoglutarsäuren. Diese Metaboliten können jedoch im Verlauf der kontinuierlichen Fettbiodegradation durch die Zellen ebenfalls in Zitronensäure umgesetzt oder zur Biomassebildung genutzt werden. Der Vorteil dieses Verfahrens zur Biodegradation von Fetten und Ölen liegt vor allem darin, daß die entstehenden Metaboliten primär nicht toxisch sind und durch die übliche Mikroflora der biologischen Abwasserkläranlagen problemlos abgebaut werden können. Weil der verwendete Mikroorganismus aus der natürlichen Umwelt isoliert wurde und genetisch unverändert belassen wurde, sowie weil er zu den Arten der unpathogenen Hefen mit breitem Einsatz in der Nahrungsmittelindustrie (Herstellung der Zitronensäure, Aufbereitung der Nahrungsmittelproteasen und -lipasen etc.) gehört, besteht keine Gefahr eines negativen Einflusses auf die Umwelt oder auf die Gesundheit des Menschen.

Als Trägermaterial eignen sich Bänder oder flauschige Schnüre aus synthetischer Faser, vorzugsweise aus Polyester, die mit den von *Yarrowia lipolytica WI* induzierten Zellen besiedelt werden können. Diese Bänder oder Schnüre werden in Abschnitten von etwa 1.50m auf etwa 10cm lange Kunststolf-Röhrchen aus synthetischen Polymeren gewickelt, die einen Durchmesser von zum Beispiel 3cm bis 4cm aufweisen. Die Röhrchen bestehen zum Beispiel aus Polyvinylchlorid, Polyethylen oder Polypropylen. Die Trommel 20 der Anlage, die in mehrere Räume unterteilt sein kann, wird mit solchen umwickelten Rohrabschnitten befüllt. Dann wird dieses Trägermaterial mit den durch *Yarrowia lipolytica WI* induzierten Zellen besiedelt, wonach die Anlage betriebsbereit ist und das Fett und Oel kontinuierlich oder in zeitlichen Intervallen zugeführt werden kann. Anlässlich von praktischen Versuchen mit der Anlage enthielt das Medium im Trommelbehälter 9 als Stickstoffquelle NH₄⁺ in einer Konzentration von 100 mg/l bis 400 mg/l. Der pH-Wert im Medium stellte sich innerhalb von 35 Wochen zwischen 1,02 und 3,0 ein. Die Temperatur des Mediums bewegte sich zwischen 25°C und 28°C. Das Wasser beim Austritt aus der Anlage enthielt Öl in einer Konzentration von 38,25 mg/l bis 48,12 mg/l (gravimetrische Bestimmung nach der Extraktion ins organische Lösemittel).

Vertreter der Art *Yarrowia lipolytica,* insbesondere der Stamm *Yarrowia lipolytica WI,* weisen bei Anwesenheit von Ölen und Fette eine gute lipolytische Aktivität auf, ähnlich wie bei Anwesenheit der Emulsionen dieser Stoffe im Wassermedium. Die Biodegradationsrate dieser Kontaminanten des Wassermediums durch die Zellen des Stammes *Yarrowia lipolytica Wl* liegt in breiten Grenzen des pH-Wertes zwischen 0,8 und 7,0 und bei Temperaturen von 5°C bis 35°C relativ hoch. Bedingungen zur Erreichung der optimalen physiologischen Aktivität von *Yarrowia lipolytica WI* sind: Erstens eine ausreichende Sauerstoffzufuhr in Grenzen zwischen 0,3 und 1,0 Liter Luft pro 1 Liter Abwasser und Stunde, zweitens eine genügende NH₄⁺-Konzentration von wenigstens 60mg/l und drittens eine Konzentration von 0,1% bis 3% (w/v) Fett oder Öl im Medium. Das aus der Anlage entlassene Abwasser wird durch die Zitronensäure nur sehr schwach angesäuert. Es kann ohne weiteres in den kommunalen Abwasserkläranlagen gereinigt werden.

## Patentansprüche

1. Anlage zum Beseitigen von Fett und Oel, mit einem Behälterraum (9) zur Aufnahme eines flüssigen Mediums, aus welchem Behälterraum (9) über einen unten liegenden Ablauf (12) ein aufsteigendes Ueberlaufrohr (55) führt, das ausserhalb des Behälterraumes (9) mündet, sodass dessen innere Unterkante beim Auslauf das Niveau des Mediums im Behälterraum (9) definiert, wobei im Behälterraum (9) mit fett- und öl-degradierenden Mikroorganismen besiedeltes Trägermaterial vorhanden ist, weiter dass die Anlage Mittel zur Versorgung dieser Mikroorganismen mit Luft sowie eine Zudosiereinrichtung (56-60;26,37) mit speicherprogrammierbarer Steuerung einschliesst, mittels welcher zuvor abgeschiedenes Fett und Oel aus einem zur Anlage gehörigen Behälterraum (7) oder aus einem gesonderten Fettabscheider dem Behälterraum (9) dosiert zuführbar ist.

2. Anlage nach Anspruch 1 zum Abscheiden und nachfolgenden Beseitigen von Fetten und Oelen in Abwässern, bestehend aus einem Behälter (1) mit einem Zulauf- (2) und einem Ablaufrohr (15), dadurch gekennzeichnet, dass dessen Inneres wenigstens einen Behälterraum (7,8) zum Abscheiden der Fette und Oele aus dem zulaufenden Abwasser aufweist, und weiter einen davon getrennten Behälterraum (9), in dem mit fettund öl-degradierenden Mikroorganismen besiedeltes Trägermaterial vorhanden ist.

3. Anlage nach Anspruch 2, dadurch gekennzeichnet, dass im Behälterraum (9) eine Trommel (20) drehbar gelagert ist, in welcher das besiedelte Trägermaterial untergebracht ist, wobei die Trommel (20) elektrisch antreibbar ist, und dass die Zudosiereinrichtung (26,37) durch ein um eine Achse (21) drehbares Schöpfrohr (26) mit Einleitkanal (37) gebildet ist.

4. Anlage nach einem der vorhergehenden Ansprüche, dadurch gekennzeichnet, dass sie einen Ventilator (36) mit Rückschlagklappe aufweist, mit dem Luft in das Innere des des Behälterraumes (9) einblasbar ist, oder dass eine Sauerstoff- oder Luftzuführeinrichtung vorhanden ist, mittels derer Luft oder Sauerstoff in feinen Mikrobläschen unten in den Behälterraum (9) einpumpbar ist, und dass der Behälter (1) zur Entlüftung einen Geruchfilter (47) oder eine Oeffnung im durch den Behälter (1) verlaufenden Ablaufrohr (55;15) aufweist, und dass sie einen Behälter mit Dosierpumpe zur bedarfsweisen Zufuhr von Nährlösung in den Behälterraum (9) für die fett- und öldegradierenden Mikroorganismen aufweist, sowie dass sie eine speicherprogrammierbare elektrische Steuerung aufweist, mittels der die Zudosierung von Fett und Oel, die Zufuhr von Luft oder Sauerstoff und die Zudosierung von NH₄⁺ in den Behälterraum (9) regelbar ist.

5. Anlage nach einem der vorhergehenden Ansprüche, dadurch gekennzeichnet, dass das Trägermaterial im Behälterraum (9) aus einer Vielzahl von mit Polyesterschnüren bewickelten Kunststoff-Röhrchen besteht, die mit der Hefe *Yarrowia lipolytica W1* der Hinterlegung CCM 4510 besiedelt sind, und dass ein Behälter mit Dosierpumpe zur bedarfsweisen Zufuhr von NH₄⁺ als Stickstoffquelle in den Behälterraum (9) für die Fett- und Oel-degradierenden Mikroorganismen vorhanden ist.

6. Anlage nach einem der Ansprüche 2 bis 5, dadurch gekennzeichnet, dass der Behälter (1) im Anschluss an das Einlaufrohr (2) zunächst einen Behälterraum (7) zur Abscheidung und als Sinkstoffraum für Schlämme und Feststoffe aufweist, daran anschliessend durch eine Trennwand (3) abgetrennt einen Behälterraum (8) mit niedrigerem Pegel (39) zur weiteren Abscheidung, aus welchem mit der Zudosiereinrichtung (25,37) abgeschiedenes Oel und Fett entnehmbar ist, dann den durch eine Trennwand (10) und einen Kännelboden (11) vom Behälterraum (8) abgetrennten Behälterraum (9), in dem mit fett- und öldegradierenden Mikroorganismen besiedeltes Trägermaterial vorhanden ist, und aus dessen Boden (11) ein Ueberlaufrohr (13) im Behälterraum (8) oberhalb des Pegels (39) im Behälterraum (8) mündet.

7. Anlage nach einem der Ansprüche 2 bis 6, dadurch gekennzeichnet, dass unterhalb des Behälterraumes (8) und von diesem mit einem geneigten und durchlässigen Boden (16) abgetrennt in einem Behälterraum (18) eine Reihe von eng nebeneinander und schräg angeordneten Lamellen (44) mit ölanziehender Oberfläche angeordnet sind, durch welche das mittels Abscheidung gereinigte Abwasser zwangsweise strömen muss, bevor es in das Ablaufrohr (15) gelangt, und dass das Ablaufrohr (15) durch einen Behälter (50) führt, dessen Inneres mit einem Material (42) gefüllt ist, das die Fähigkeit hat, Fett zu akkumulieren beziehungsweise aufzusaugen, wonach das Ablaufrohr (15) aus dem Behälter (1) herausführt.

8. Anlage nach Anspruch 7, dadurch gekennzeichnet, dass der Behälter (50) ein mit einem Boden (51) verschlossenes Rohr (50) ist, das an beiden Enden durchlässig ist und durch eine Oeffnung passgenau in den aufsteigenden Teil des Ablaufrohres (15) gestellt ist und mit Material (42) gefüllt ist, das die Fähigkeit hat, Fett zu akkumulieren beziehungsweise aufzusaugen.

9. Anlage nach einem der Ansprüche 1, 4 oder 5, dadurch gekennzeichnet, dass die Zudosiereinrichtung aus einem Rohr (58) mit Archimedes-Schraube (59) besteht, die von einem Motor (60) antreibbar ist, und dass von diesem Rohr (58) ein Rohr (57,56) in den Behälterrraum (9) abzweigt und dort mündet, sowie dass aus dem Behälterraum (9) ein Ueberlaufrohr (55) hinausführt, dessen Steighöhe den Pegelstand im Behälterraum (9) definiert.

10. Anlage nach einem der vorhergehenden Ansprüche, dadurch gekennzeichnet, dass sie oben mit einem Deckel (46), der auf einer Gummidichtung ruht, geruchsdicht verschlossen ist, wobei der Deckel (46) scharnierend aufschwenkbar und mittels Gasfedern gestützt ist.

## Claims

1. An installation for removing fat and oil, with a container chamber (9) for receiving a liquid medium, from which container chamber (9), via an outlet (12) at the bottom, an overflow pipe (55) runs upwards, which opens out outside container chamber (9) so that its inside bottom edge defines the level of the medium in container chamber (9) at the point where it opens out, with there being carrier material colonized with fat and oil-degrading micro-organisms in container chamber (9), and, furthermore, in that there is a metering device (56-60;26,37) with a programmable control device by which means fat and oil can be metered from another container to container chamber (9) above the level of its medium.

2. The installation of claim 1 for the separation and subsequent removal of fats and oils in waste water, comprising a container (1) with an inlet pipe (2) and a discharge pipe (15), characterized in that in it, there is at least one container chamber (7,8) for separating the fats and oils from the inflowing waste water, plus a separate container chamber (9) containing carrier material colonized with fat and oil-degrading micro-organisms.

3. The installation of claim 2, characterized in that in container chamber (9) a drum (20) is rotatably mounted, in which the colonized carrier material is housed, with drum (20) being powered by electricity, in that the metering device (26,37) comprises a scoop pipe (26) that can rotate around an axle (21) with an inlet channel (37), and in that an overflow pipe (13) runs out of the bottom of container chamber (9) and upwards outside container chamber (9), the top aperture (14) of which defines the level in container chamber (9).

4. The installation of one of the preceding claims, characterized in that it has a ventilator (36) with a one-way valve, with which air can be blown into container chamber (9), or in that there is an oxygen or air-supplying device with which fine micro-bubbles of air or oxygen can be pumped up into container chamber (9), and in that for the purpose of removing exhaust air, container (1) has an odour filter (47) or an opening in the discharge pipe (55; 15) that runs through container (1), and in that it has a container with a metering pump for feeding nutrient solution into container chamber (9) as required for the fat and oil-degrading micro-organisms, and in that it has a programmable electric control device by which means the quantities of fat and oil, air or oxygen and NH₄⁺ metered into container chamber (9) can be regulated.

5. The installation of one of the preceding claims, characterized in that the carrier material in container chamber (9) comprises a plurality of plastic tubes wound with lengths of polyester cord colonized with the yeast *Yarrowia lipolytica W1* in line with deposit CCM 4510, and in that there is a container with a metering pump for feeding NH₄⁺ into container chamber (9) as required as a source of nitrogen for the fat and oil-degrading micro-organisms.

6. The installation of one of claims 2 to 5, characterized in that following on immediately from inlet pipe (2), container (1) has a container chamber (7) for the separation process and as a chamber in which the sludge and solids can settle, followed by a container chamber (8), separated by a partition (3), with a lower liquid level (39) for further separation, from which separated oil and fat can be removed with the metering device (26,37), followed by the container chamber (9), which is separated from container chamber (8) by a partition (10) and a channelled bottom (11), in which there is carrier material colonized with fat and oil-degrading micro-organisms, and from the bottom (11) of which an overflow pipe (13) opens out in container chamber (8) above level (39) in container chamber (8).

7. The installation of one of claims 2 to 6, characterized in that underneath container chamber (8) and separated from the latter by a sloping, pervious floor (16), there is a series of slats (44) in a separate container chamber (18) disposed closely together and slopingly with oil-attracting surfaces, through which the waste water already purified by means of separation is forced to flow before it can enter discharge pipe (15), and in that discharge pipe (15) runs through a container (50) the inside of which is filled with a material (42) with the capacity to accumulate, i.e. absorb fat, after which discharge pipe (15) runs out of container (1).

8. The installation of claim 7, characterized in that container (50) is a pipe (50) with a sealed bottom (51), which is pervious at both ends and introduced through an opening so as to fit snugly in the rising section of discharge pipe (15) and is filled with a material (42) with the capacity to accumulate, i.e. absorb fat.

9. The installation of one of claims 1, 4 or 5, characterized in that the metering device comprises a pipe (58) with an Archimedes screw (59) which can be driven by a motor (60), and in that from this pipe (58), a pipe (57,56) branches off into container chamber (9) and opens out there, and in that an overflow pipe (55) runs out of container chamber (9) and defines the level in container chamber (9) at its highest point.

10. The installation of one of the preceding claims, characterized in that it is odourtightly sealed off at the top by a lid (46) which rests on a rubber gasket, with the lid (46) being pivotable on hinges and supported by means of pneumatic springs.

## Revendications

1. Installation pour l'élimination de graisses et d'huiles, comportant un compartiment de bac (9), destiné à recevoir un fluide liquide, cependant qu'à partir de ce compartiment (9) de bac et par l'intermédiaire d'un dispositif d'évacuation (12) placé en dessous il est disposé un tuyau de trop-plein (55) ascendant, qui débouche à l'extérieur du compartiment de bac (9), de sorte que le bord inférieur de ce compartiment (9) de bac définit pendant l'écoulement le niveau du fluide dans le compartiment (9), dans lequel se trouve un matériau de support colonisé avec des micro-organismes dégradant les huiles et les graisses, et que par ailleurs l'installation comporte des moyens d'alimentation de ces micro-organismes en air ainsi qu'un dispositif d'alimentation dosée (56 à 60; 26, 37) comportant un automate programmable, au moyen duquel la graisse et l'huile séparées auparavant peuvent être amenées dosées au compartiment de bac (9) à partir d'un compartiment (7) de bac faisant partie de l'installation ou à partir d'un séparateur de graisse séparé.

2. Installation suivant la revendication 1 pour la séparation et l'élimination ultérieure de graisses et d'huiles dans les eaux usées, composée d'un bac (1), comportant un tuyau d'alimentation (2) et un tuyau d'évacuation (15), caractérisée en ce que l'intérieur du bac comporte au moins un compartiment (7, 8) de bac pour la séparation des graisses et huiles provenant de l'eau usée alimentée et par ailleurs un compartiment de bac (9), qui en est séparé, dans lequel un matériau de support est colonisé avec des micro-organismes dégradant les graisses et les huiles.

3. Installation suivant la revendication 2, caractérisée en ce que dans le compartiment de bac (9) un tambour (20) est logé rotatif, dans lequel le matériau de support colonisé est logé, le tambour (20) pouvant être entraîné électriquement, et que le dispositif d'alimentation dosée (26, 37) est formé par un tuyau à puiser (26) tournant autour d'un axe (21) et comportant un canal d'introduction (37).

4. Installation suivant une des revendications précédentes, caractérisée en ce qu'elle comporte un ventilateur (36) à clapet anti-retour, avec lequel de l'air peut être insufflé dans l'intérieur du compartiment (9) de bac ou qu'il existe un dispositif d'alimentation en oxygène ou en air, au moyen duquel de l'air ou de l'oxygène peut être pompé en fines bulles dans le bas du compartiment (9) de bac et que le bac (1) comporte, pour l'évacuation de l'air, un filtre à odeurs (47) ou une ouverture dans le tuyau d'évacuation (55; 15) passant à travers le bac (1), et que l'installation comporte un bac à pompe doseuse pour alimenter en solution nutritive, suivant les besoins, le compartiment de bac (9) pour les micro-organismes dégradant les graisses et les huiles, cependant que l'installation comporte un automate programmable électronique, au moyen duquel l'alimentation dosée des graisses et des huiles, l'alimentation en air ou en oxygène et l'alimentation dosée en NH₄⁺ vers le compartiment de bac (9) peuvent être régulées.

5. Installation suivant une des revendications précédentes, caractérisée en ce que le matériau de support se trouvant dans le compartiment de bac (9) est constitué par un grand nombre de petits tubes en matière plastique, portant des enroulements de cordons en polyester, colonisés par la levure *Yarrowia lipolytica Wl* du dépôt de propriété industrielle CCM 4510 et qu'il est prévu un bac à pompe doseuse pour l'alimentation, suivant les besoins, en NH₄⁺, constituant une source d'azote, dans le compartiment de bac (9) pour les micro-organismes dégradant la graisse et l'huile.

6. Installation suivant les revendications 2 à 5, caractérisée en ce que le bac (1) faisant suite au tuyau d'arrivée (2) présente d'abord un compartiment de bac (7) destiné à la séparation et utilisé comme compartiment de décantation pour les boues et les corps solides, et qu'il présente, à la suite de cela et séparé par une cloison (3), un compartiment de bac (8), à niveau (39) plus bas, pour la continuation de la séparation, à partir duquel l'huile et la graisse séparées au moyen du dispositif d'alimentation dosée (25, 37) peuvent être prélevées, puis le compartiment de bac (9), séparé du compartiment de bac (8) par une cloison (10) et un fond (11) de goulotte, ce compartiment de bac (9) contenant un matériau de support colonisé par des micro-organismes, dégradant la graisse et l'huile, cependant qu'à partir de son fond (11) un tuyau de trop-plein (13) débouche dans le compartiment de bac (8) au-dessus du niveau (39) régnant dans le compartiment de bac (8).

7. Installation suivant les revendications 2 à 6, caractérisée en ce qu'au-dessous du compartiment de bac (8) et séparée de celui-ci par un fond (16) incliné et perméable, il est disposé dans un compartiment de bac (18) une série de lamelles (44) inclinées et serrées les unes à côté des autres, dont la surface attire l'huile, cependant que l'eau usée épurée par séparation doit s'écouler nécessairement à travers ces lamelles et que le tuyau d'évacuation (15) traverse un récipient (50), dont l'intérieur est rempli d'un matériau pouvant accumuler et/ou absorber de la graisse, le tuyau d'évacuation (15) sortant ensuite du bac (1).

8. Installation suivant la revendication 7, caractérisée en ce que le récipient (50) est un tuyau (50) fermé par un fond (51), qui est perméable aux deux extrémités, ajusté avec précision à travers une ouverture dans la partie montante du tuyau d'évacuation (15) et rempli d'un matériau (42) ayant la possibilité d'accumuler et/ou d'absorber de la graisse.

9. Installation suivant une des revendications 1, 4 ou 5, caractérisée en ce que le dispositif d'alimentation dosée est formé par un tube (58) à vis d'Archimède (59) pouvant être entraînée par un moteur (60) et qu'à partir de ce tube (58), un tuyau (57, 56) est dérivé dans le compartiment de bac (9), où il débouche, cependant que du compartiment de bac (9) il sort un tuyau de trop-plein (55), dont la hauteur de remontée définit le niveau existant dans le compartiment de bac (9).

10. Installation suivant une des revendications précédentes, caractérisée en ce qu'elle est fermée d'une manière ne laissant pas passer les odeurs par un couvercle (46) qui repose sur un joint en caoutchouc, ce couvercle pouvant s'ouvrir par un dispositif à charnières et s'appuyant sur des amortisseurs pneumatiques.
